# EUROPÄISCHE PATENTSCHRIFT

(11) **EP 3 748 400 B1**
(45) Veröffentlichungstag und Bekanntmachung des Hinweises auf die Patenterteilung: **04.06.2025**
(21) Anmeldenummer: 20161072.2
(22) Anmeldetag: 05.03.2020
(51) Int. Cl.: G01S 17/10, F41H 13/00, G01S 17/86

(54) **LASERWAFFENSYSTEM UND VERFAHREN ZUR ENTFERNUNGSMESSUNG**
LASER WEAPON SYSTEM AND METHOD FOR MEASURING DISTANCES
SYSTÈME D'ARMES LASER ET PROCÉDÉ DE MESURE DE DISTANCE

(30) Priorität: 06.06.2019 DE 102019003948
(43) Veröffentlichungstag der Anmeldung: 09.12.2020
(73) Patentinhaber: MBDA Deutschland GmbH, 86529 Schrobenhausen (DE)
(72) Erfinder: MOHRING, Bernd, 86529 Schrobenhausen (DE); THEOBALD, Christian, 86153 Augsburg (DE); DIETRICH, Stephan, 86916 Kaufering (DE)
(74) Vertreter: Isarpatent

(56) Entgegenhaltungen:
- EP-A1- 3 118 561
- EP-A2- 0 922 968
- DE-A1- 102012 104 349
- US-A1- 2009 059 201
- US-B1- 8 218 589

## Beschreibung

Die vorliegende Erfindung betrifft ein Laserwaffensystem und Verfahren zur Entfernungsmessung zwischen einem derartigen Laserwaffensystem und einem Ziel.

Bei typischen Systemen zur Einwirkung auf ein Zielobjekt mittels gerichteter elektromagnetischer Strahlung wird ein hochenergetischer Laserstrahl verwendet, um das Ziel zu stören und/oder zu schädigen. Um eine hohe Effizienz des Systems zu erreichen, ist eine genaue Kenntnis der Entfernung des Systems zu dem Zielobjekt essentiell, z.B. zur Fokussierung des Wirklasers auf das Zielobjekt. Üblicherweise werden zur Bestimmung der Entfernung separate Entfernungsmesser verwendet, die - je nach Funktionsprinzip - eigene Strahlungsquellen zur Aussendung von elektromagnetischer Strahlung verwenden.

Ein weit verbreitetes Verfahren zur Entfernungsbestimmung nutzt einen separaten gepulsten Laserstrahl, der auf das Ziel gerichtet wird, siehe beispielsweise die Druckschrift DE 10 2010 053 896 A1. Der reflektierte Strahlungspuls kann mit einem Detektor erfasst werden und darauf aufbauend eine Laufzeitmessung durchgeführt werden. Durch Messen der Zeit, die ein Lichtpuls braucht, um von der Messvorrichtung zu dem Zielobjekt und zurück zu laufen, wird hierbei über die Lichtgeschwindigkeit die Distanz zwischen der Quelle und dem Zielobjekt ermittelt.

Laserwaffensysteme sind auch aus US 8,218,589 B1 und EP 3 118 561 A1 bekannt.

Vor diesem Hintergrund liegt der vorliegenden Erfindung die Aufgabe zugrunde, einfachere und dennoch präzise Lösungen für ein Laserwaffensystem mit Entfernungsmesser zu finden.

Erfindungsgemäß wird diese Aufgabe gelöst durch ein Laserwaffensystem mit den Merkmalen des Patentanspruchs 1 und durch ein Verfahren mit den Merkmalen des Patentanspruchs 6.

Demgemäß ist ein Laserwaffensystem vorgesehen. Das Laserwaffensystem umfasst einen Wirklaser, welcher dazu ausgebildet ist, ein Ziel mit einem Dauerstrich-Laserstrahl mit einer vorgegebenen Strahlintensität zu bestrahlen; und einen Strahlungsdetektor, welcher dazu ausgebildet ist, Reflexionslaserstrahlung zu erfassen, die von dem Ziel mit einer Reflexionsintensität reflektiert wird; wobei der Wirklaser dazu ausgebildet ist, der Strahlintensität des Dauerstrich-Laserstrahls einen Modulationspuls aufzuprägen, und wobei der Strahlungsdetektor dazu ausgebildet ist, den Modulationspuls in der Reflexionsintensität der erfassten Reflexionslaserstrahlung nachzuweisen und über eine Laufzeitmessung des Modulationspulses eine Entfernung des Ziels von dem Laserwaffensystem zu bestimmen.

Weiterhin ist ein Verfahren zur Entfernungsmessung zwischen einem Laserwaffensystem und einem Ziel vorgesehen. Das Verfahren umfasst Bestrahlen des Ziels mit einem Dauerstrich-Laserstrahl eines Wirklasers des Laserwaffensystems mit einer vorgegebenen Strahlintensität, wobei der Strahlintensität des Dauerstrich-Laserstrahls ein Modulationspuls aufgeprägt wird; Erfassen von Reflexionslaserstrahlung mit einem Strahlungsdetektor des Laserwaffensystems, welche von dem Ziel mit einer Reflexionsintensität reflektiert wird; Nachweisen des Modulationspulses in der Reflexionsintensität der erfassten Reflexionslaserstrahlung; und Bestimmen der Entfernung des Ziels von dem Laserwaffensystem über eine Laufzeitmessung des Modulationspulses.

Eine der vorliegenden Erfindung zugrunde liegende Idee besteht darin, den eigentlichen Wirklaser gleichzeitig zur Entfernungsmessung zu verwenden und dadurch die Notwendigkeit für einen zweiten Laser zur Entfernungsmessung zu beseitigen. Der Wirklaser arbeitet hierzu im Dauerstrichbetrieb, wobei er mit einem oder mehreren kurzen charakteristischen Pulsen moduliert wird. Hierdurch wird der Aussteuergrad des Wirklasers ("duty cycle") lediglich minimal reduziert. Die Pulse können in der reflektierten Strahlung mit dem Strahlungsdetektor anhand ihrer charakteristischen Eigenschaften identifiziert werden. Der Strahlungsdetektor kann hierzu beispielweise die reflektierte Strahlung kontinuierlich messen. Sobald der oder die Pulse identifiziert wurden, kann über die Zeitdauer zwischen Aussenden und Empfangen des jeweiligen Pulses die Entfernung zu dem Ziel ermittelt werden.

Zusammenfassend bietet die vorliegende Erfindung somit einen erheblich einfacheren Aufbau als herkömmliche Laserwaffensysteme mit separatem laserbasierten Entfernungsmesser. Typische Wirklaser bieten zudem eine sehr große Reichweite im Vergleich zu konventionellen Entfernungsmessern. Die Entfernungsmessung kann mit dem vorliegenden System mit hohen, z.B. konstanten, Wiederholraten durchgeführt werden. Alternativ oder zusätzlich kann die Entfernungsmessung jedoch ebenso lediglich sporadisch nach Bedarf ausgelöst werden.

Vorteilhafte Ausgestaltungen und Weiterbildungen ergeben sich aus den weiteren Unteransprüchen sowie aus der Beschreibung unter Bezugnahme auf die Figuren.

Erfindungsgemäß ist der Wirklaser dazu ausgebildet, den Modulationspuls durch Senkung und/oder Erhöhung der Strahlintensität über eine Pulsdauer hinweg zu erzeugen. Das Verfahren umfasst entsprechend Erzeugen des Modulationspulses durch Senkung und/oder Erhöhung der Strahlintensität über eine Pulsdauer hinweg.

Für die Modulation des Wirklasers stehen hierbei unterschiedliche Möglichkeiten zur Verfügung. Beispielsweise kann im einfachen Fall eine kuzzeitige (z.B. <1 ms) Reduktion der Intensität/Leistung des Wirklasers erfolgen. Ein derartiger Puls kann eine beliebige Pulsform aufweisen, z.B. Rechteck, Gauß, Sech2, Sägezahn, Lorentzkurve etc. Prinzipiell umfassen Modulationspulse im Sinne der Erfindung jedoch ebenso komplexere kurzzeitige Modulationen der Strahlintensität des Wirklasers, z.B. eine Schwingung der Strahlintensität mit einer Modulationsamplitude um einen Normwert der Strahlintensität, welcher den Wert angibt, bei dem der Wirklaser außerhalb des kurzen Pulsfensters im Dauerstrichbetrieb betrieben wird. Ein Modulationspuls im Sinne der Erfindung ist hierbei eine kurzzeitige, d.h. bezogen auf den Dauerstrichbetrieb des Wirklasers vernachlässigbar lange, Veränderung der Intensität und/oder Leistung des Wirklasers, bei der die Intensität/Leistung um eine Modulationshöhe vergrößert und/oder um eine Modulationstiefe verkleinert wird.

Erfindungsgemäß weist der Modulationspuls eine Pulsdauer von weniger als 1 ms auf. Beispielsweise kann die Pulsdauer 0,5 ms betragen.

Erfindungsgemäß ist der Wirklaser dazu ausgebildet, den Modulationspuls durch kurzzeitigen Betrieb des Wirklasers in einem Überlastbereich und/oder einem Unterlastbereich zu erzeugen. Das Verfahren umfasst entsprechend Erzeugen des Modulationspulses in einem Überlastbereich und/oder einem Unterlastbereich.

Die üblicherweise in einem Wirklaser zur Anwendung kommenden Laserdioden können typischerweise kuzzeitig (<1 ms) in einen Überlastbereich gefahren werden. Hierbei kann die Leistung bzw. Intensität kurzzeitig bis zu 50% über den Normwert hochgefahren werden. Die Intensität des Wirklasers kann jedoch ebenso derart moduliert werden, dass der Wirklaser nicht nur in den Überlastbereich sondern auch in einen Unterlastbereich gefahren wird. Allgemein kann der Modulationspuls einen komplexen Verlauf in der Intensität aufweisen, der beispielsweise eine Schwingung oder einen mehrfachen Wechsel zwischen dem Überlastbereich und dem Unterlastbereich umfassen kann.

Gemäß einer Weiterbildung kann der Wirklaser dazu ausgebildet sein, der Strahlintensität mehrere Modulationspulse aufzuprägen. Der Wirklaser kann ferner zu einer adaptiven Anpassung einer Modulationsamplitude der Modulationspulse ausgebildet sein. Das Verfahren kann entsprechend Aufprägen mehrerer Modulationspulse auf die Strahlintensität umfassen. Das Verfahren kann ferner adaptives Anpassen einer Modulationsamplitude der Modulationspulse umfassen.

Eine Modulationstiefe und/oder Modulationshöhe, d.h. eine Abweichung von einer Normintensität des Wirklasers, ist somit nicht notwendigerweise fest vorgegeben, sondern kann adaptiv angepasst werden. Beispielsweise kann die Modulationstiefe bzw. Modulationshöhe verkleinert werden, wenn der Modulationspuls in dem Empfänger gut erkannt wird. Unter Modulationsamplitude wird hierbei der Betrag der Änderung der Intensität bzw. Leistung des Wirklasers um den Normwert verstanden.

Gemäß einer Weiterbildung kann der Strahlungsdetektor dazu ausgebildet sein, den Modulationspuls durch Abgleich eines Signalverlaufs der Reflexionsintensität der erfassten Reflexionslaserstrahlung mit einem Signalverlauf der Strahlintensität des Dauerstrich-Laserstrahls nachzuweisen. Das Verfahren kann entsprechend Nachweisen des Modulationspulses durch Abgleich eines Signalverlaufs der Reflexionsintensität der erfassten Reflexionslaserstrahlung mit einem Signalverlauf der Strahlintensität des Dauerstrich-Laserstrahls umfassen.

Die charakteristische Modulation des empfangenen Signals wird in der Regel hierbei nicht mit einem Soll-Signal (Signal an einem Modulations-Eingang) verglichen, sondern mit einem Ist-Wert (gemessene optische Leistung des Wirklasers), d.h. mit dem Ausgangssignal der entsprechenden Laserdioden. Ungenauigkeiten wie beispielsweise Fluktuationen ("Jitter") oder dergleichen werden somit automatisch berücksichtigt.

Gemäß einer Weiterbildung kann der Strahlungsdetektor dazu ausgebildet sein, die Laufzeitmessung mittels einer Flankendetektion in den Signalverläufen der Intensitäten durchzuführen. Das Verfahren kann entsprechend Durchführen der Laufzeitmessung mittels einer Flankendetektion in den Signalverläufen der Intensitäten umfassen.

Bei einer "einfachen" Modulation kann somit eine Detektion einer fallenden/steigenden Flanke im Verlauf der optischen Leistung genutzt werden. Die Differenz aus den Zeitpunkten der fallenden/steigenden Flanken ergibt die Zeitdauer zur Bestimmung der Entfernung.

Gemäß einer Weiterbildung kann der Modulationspuls eine charakteristische Amplitudenvariation in einer Modulationsamplitude aufweisen. Der Strahlungsdetektor kann dazu ausgebildet sein, die Laufzeitmessung durch eine Korrelationsmessung in den Signalverläufen der Intensitäten durchzuführen. Das Verfahren kann entsprechend Durchführen der Laufzeitmessung durch eine Korrelationsmessung in den Signalverläufen der Intensitäten umfassen.

Bei "komplexeren" Modulationen kann die Bestimmung der Zeitdauer beispielsweise über eine Korrelationsmessung der Signalverläufe der ausgesendeten und empfangenen optischen Leistung erfolgen. Eine Autokorrelation ermöglicht beispielsweise eine Unterabtastung und somit eine im Vergleich der Modulationszeit noch bessere Abschätzung der Entfernung. Insbesondere bei langsamen Stromreglern der Laserdioden (des Hochenergielasers) ermöglichen solche Techniken eine deutliche verbesserte Flanken- und Signalauflösung und damit eine verbesserte Entfernungsschätzung.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: schematische Ansicht eines Laserwaffensystems gemäß einer Ausführungsform der Erfindung;
- Fig. 2 bis 7: schematische Intensitätsverläufe von Modulationspulsen mit dem Laserwaffensystem aus Fig. 1; und
- Fig. 8: schematisches Ablaufdiagramm eines Verfahrens zur Entfernungsmessung mit dem Laserwaffensystem aus Fig. 1.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

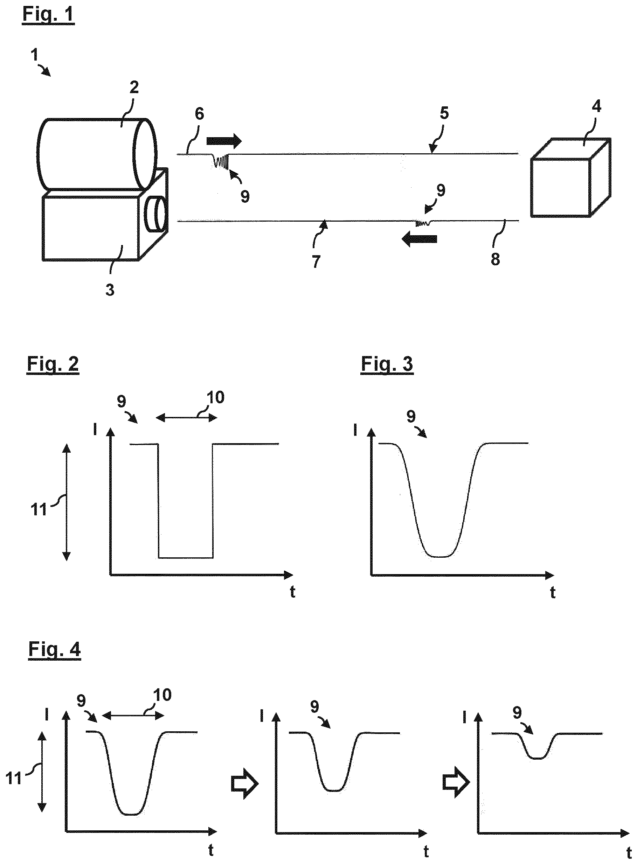

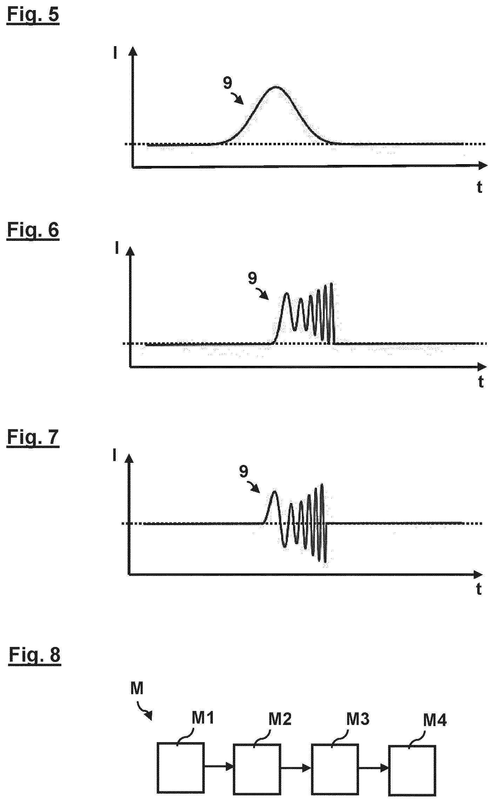

Figur 1 zeigt eine schematische Ansicht eines Laserwaffensystems 1 gemäß einer Ausführungsform der Erfindung. Fig. 8 zeigt ein schematisches Ablaufdiagramm eines Verfahrens zur Entfernungsmessung mit dem Laserwaffensystem aus Fig. 1.

Gewöhnliche Entfernungsmessungen zu einem Zielobjekt über größere Entfernungen (z.B. über 1 m) arbeiten häufig nach dem Prinzip der Laufzeitmessung. Diese Entfernungsmesser sind in der Regel aus einem Sender (Lichtquelle/Laser mit Optik, einem Empfänger (Optik und Empfangsdiode(n)) und zusätzlicher Elektronik zur Auswertung und Ansteuerung aufgebaut. Dabei wird üblicherweise ein einzelner oder mehrere getrennte Lichtpulse von einem Sender in Richtung des Zielobjektes ausgesendet und die Zeit gemessen, die der oder die Pulse brauchen, um von dem Sender zu dem Zielobjekt und wieder zurück zu dem Empfänger zu laufen. Dadurch kann letztendlich die Entfernung ermittelt werden.

Bei Systemen zur Schädigung oder Störung eines Objekts mittels gerichteter elektromagnetischer Strahlung ("Hochenergielaser-Systemen, "Abwehrstrahlung", "Directed Energy" etc.) wird ein (hochenergetischer) Laserstrahl ("Wirklaser') auf ein Zielobjekt gerichtet. Für eine gute Effizienz eines derartigen Systems ist dazu eine genaue Kenntnis der Entfernung zum Zielobjekt hilfreich bzw. notwendig, z.B. zur Fokussierung des Wirklasers auf das Zielobjekt und/oder zur Fokussierung des Bildes zur Beobachtung bzw. zur Verfolgen ("Tracking"). Üblicherweise werden zur Bestimmung der Entfernung separate Entfernungsmesser verwendet, die - je nach Funktionsprinzip - dann eigene Quellen zur Aussendung eines Lichtpulses verwenden.

In dem in Fig. 1 gezeigten Laserwaffensystem 1 wird ein völlig anderer Ansatz verwendet, bei dem keine eigene Quelle notwendig ist. Vielmehr wird ein im Dauerstrich-Betrieb arbeitender Wirklaser 2 als Entfernungsmesser verwendet. Als zusätzliches Bauteil ist lediglich ein geeigneter Empfänger zur Detektion notwendig (Strahlungsdetektor 3).

Konkret umfasst das Laserwaffensystem 1 in Fig. 1 somit einen Wirklaser 2, welcher dazu ausgebildet ist, ein Ziel 4 mit einem Dauerstrich-Laserstrahl 5 mit einer vorgegebenen Strahlintensität 6 zu bestrahlen. Ferner umfasst das Laserwaffensystem 1 einen Strahlungsdetektor 3, welcher dazu ausgebildet ist, Reflexionslaserstrahlung 7 zu erfassen, die von dem Ziel 4 mit einer Reflexionsintensität 8 reflektiert wird.

Der Wirklaser 2 ist dazu ausgebildet, der Strahlintensität 6 des Dauerstrich-Laserstrahls 5 einen Modulationspuls 9 aufzuprägen. Hierzu erhöht bzw. senkt der Wirklaser 2 die Strahlintensität 6 über eine kurze Pulsdauer 10 hinweg, erfindungsgemäß weniger als 1 ms. Beispielsweise kann eine kurzzeitige Reduktion der Intensität bzw. Leistung des Wirklasers 2 zu den in Fig. 2 und 3 gezeigten Intensitätsverläufen führen.

Dies wird erfindungsgemäß realisiert, indem Laserdioden des Wirklasers 2 (nicht abgebildet) kurzzeitig in einen Überlastbereich und/oder Unterlastbereich gefahren werden (z.B. 10 %, 20 % oder bis zu 50 % bezogen auf einen Normwert). Die Modulation kann daher beispielsweise die in Fig. 5 dargestellte Form annehmen, wobei die gestrichelte Linie einen Normwert darstellt, wie er während des Dauerstrichbetriebs eingestellt ist.

Allerdings sind auch komplexere Modulationspulse 9 möglich und vorgesehen. Beispielsweise zeigt Fig. 6 einen Modulationspuls 9 mit einem komplexen zeitlichen Verlauf, bei dem eine oder mehrere Laserdioden des Wirklasers 2 in einen Überlastbereich gefahren werden.

Fig. 7 stellt ein weiteres Beispiel dar, bei welchem der Wirklaser 2 nicht nur in den Überlastbereich, sondern auch in einen Unterlastbereich gefahren wird. Die Intensität bzw. Leistung schwankt bzw. schwingt hierbei um den Normwert (gestrichelte Linie). Der Modulationspuls 9 erhält somit eine charakteristische Form. Diese charakteristische Form kennzeichnet den Modulationspuls 9 und kann in der reflektierten Strahlung wiedererkannt werden, um die Detektion des Pulses zu vereinfachen.

Wieder bezugnehmend auf Fig. 1 ist der Strahlungsdetektor 3 weiterhin dazu ausgebildet, den Modulationspuls 9 in der Reflexionsintensität 8 der erfassten Reflexionslaserstrahlung 7 nachzuweisen und über eine Laufzeitmessung des Modulationspulses 9 eine Entfernung des Ziels 4 von dem Laserwaffensystem 1 zu bestimmen. Hierzu kann ein Signalverlauf der Reflexionsintensität 8 der erfassten Reflexionslaserstrahlung 7 mit einem Signalverlauf der Strahlintensität 6 des Dauerstrich-Laserstrahls 5 abgeglichen werden.

Beispielsweise kann der Strahlungsdetektor 3 dazu ausgebildet sein, die Laufzeitmessung mittels einer Flankendetektion in den Signalverläufen der Intensitäten 6, 8 durchzuführen, z.B. im Fall einer einfachen Modulation, wie sie in Fig. 2, 3 und 5 zu sehen ist. In einem anderen Beispiel kann der Strahlungsdetektor 3 dazu ausgebildet sein, die Laufzeitmessung durch eine Korrelationsmessung in den Signalverläufen der Intensitäten 6, 8 durchzuführen, z.B. im Fall einer komplexen Modulation, wie sie in Fig. 6 und 7 zu sehen ist.

In Ausführungen kann der Wirklaser 2 darüber hinausgehend dazu ausgebildet sein, der Strahlintensität 6 mehrere (regelmäßige oder lediglich sporadische) Modulationspulse 9 aufzuprägen. Die Tiefe und/oder Höhe der einzelnen Modulationspulse 9 über einen Normwert der Intensität/Leistung kann hierbei adaptiv angepasst werden, z.B. in Abhängigkeit von einer Detektionsgüte. Fig. 4 zeigt ein Beispiel, in welchem eine Pulstiefe schrittweise verkleinert wird.

Das beschriebene Prinzip zur Entfernungsmessung invertiert somit in einem gewissen Sinne einen gewöhnlichen Laserentfernungsmesser: Es werden nicht einzelne Pulse ausgesendet und detektiert, sondern ein dauerhafter Laserstrahl wird mit charakteristischen Modulationspulsen beaufschlagt, die dann wiederum zur Laufzeitmessung herangezogen werden. Dies bietet den erheblichen Vorteil, dass der Wirklaser selber gleichzeitig als Entfernungsmesser fungieren kann, was den gesamten Aufbau des Laserwaffensystems vereinfacht.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Laserwaffensystem
- 2: Wirklaser
- 3: Strahlungsdetektor
- 4: Ziel
- 5: Dauerstrich-Laserstrahl
- 6: Strahlintensität
- 7: Reflexionslaserstrahlung
- 8: Reflexionsintensität
- 9: Modulationspuls
- 10: Pulsdauer
- 11: Modulationsamplitude
- I: Intensität
- t: Zeit
- M: Verfahren
- M1-M4: Verfahrensschritte

## Patentansprüche

1. Laserwaffensystem (1), mit:
einem Wirklaser (2), welcher dazu ausgebildet ist, ein Ziel (4) mit einem Dauerstrich-Laserstrahl (5) mit einer vorgegebenen Strahlintensität (6) zu bestrahlen; und
einem Strahlungsdetektor (3), welcher dazu ausgebildet ist, Reflexionslaserstrahlung (7) zu erfassen, die von dem Ziel (4) mit einer Reflexionsintensität (8) reflektiert wird;
wobei der Wirklaser (2) dazu ausgebildet ist, der Strahlintensität (6) des Dauerstrich-Laserstrahls (5) im Dauerstrichbetrieb einen Modulationspuls (9) aufzuprägen, und
wobei der Strahlungsdetektor (3) dazu ausgebildet ist, den Modulationspuls (9) in der Reflexionsintensität (8) der erfassten Reflexionslaserstrahlung (7) nachzuweisen und über eine Laufzeitmessung des Modulationspulses (9) eine Entfernung des Ziels (4) von dem Laserwaffensystem (1) zu bestimmen;
wobei der Wirklaser (2) dazu ausgebildet ist, den Modulationspuls (6) durch Senkung und/oder Erhöhung der Strahlintensität (6) über eine Pulsdauer (10) von weniger als 1 ms hinweg zu erzeugen, indem der Wirklaser (2) in einem Überlastbereich und/oder einem Unterlastbereich betrieben wird, in welchem die Strahlintensität (6) um eine Modulationsamplitude (11) von einer Normintensität des Wirklasers (2) abweicht.

2. Laserwaffensystem (1) nach Anspruch 1, wobei der Wirklaser (2) dazu ausgebildet ist, der Strahlintensität (6) mehrere Modulationspulse (9) aufzuprägen und wobei der Wirklaser (2) zu einer adaptiven Anpassung einer Modulationsamplitude (11) der Modulationspulse (9) ausgebildet ist.

3. Laserwaffensystem (1) nach Anspruch 1 oder 2, wobei der Strahlungsdetektor (3) dazu ausgebildet ist, den Modulationspuls (9) durch Abgleich eines Signalverlaufs der Reflexionsintensität (8) der erfassten Reflexionslaserstrahlung (7) mit einem Signalverlauf der Strahlintensität (6) des Dauerstrich-Laserstrahls (5) nachzuweisen.

4. Laserwaffensystem (1) nach einem der Ansprüche 1 bis 3, wobei der Strahlungsdetektor (3) dazu ausgebildet ist, die Laufzeitmessung mittels einer Flankendetektion in den Signalverläufen der Intensitäten (6, 8) durchzuführen.

5. Laserwaffensystem (1) nach einem der Ansprüche 1 bis 4, wobei der Modulationspuls (9) eine charakteristische Amplitudenvariation in einer Modulationsamplitude (11) aufweist und wobei der Strahlungsdetektor (3) dazu ausgebildet ist, die Laufzeitmessung durch eine Korrelationsmessung in den Signalverläufen der Intensitäten (6, 8) durchzuführen.

6. Verfahren (M) zur Entfernungsmessung zwischen einem Laserwaffensystem (1) und einem Ziel (4), mit:
Bestrahlen (M1) des Ziels (4) mit einem Dauerstrich-Laserstrahl (5) eines Wirklasers (2) des Laserwaffensystems (1) mit einer vorgegebenen Strahlintensität (6), wobei der Strahlintensität (6) des Dauerstrich-Laserstrahls (5) ein Modulationspuls (9) aufgeprägt wird;
Erfassen (M2) von Reflexionslaserstrahlung (7) mit einem Strahlungsdetektor (3) des Laserwaffensystems (1), welche von dem Ziel (4) mit einer Reflexionsintensität (8) reflektiert wird;
Nachweisen (M3) des Modulationspulses (9) in der Reflexionsintensität (8) der erfassten Reflexionslaserstrahlung (7); und
Bestimmen (M4) der Entfernung des Ziels (4) von dem Laserwaffensystem (1) über eine Laufzeitmessung des Modulationspulses (9);
wobei der Modulationspuls (9) durch Senkung und/oder Erhöhung der Strahlintensität (6) über eine Pulsdauer (10) von weniger als 1 ms hinweg erzeugt wird, indem der Wirklaser (2) in einem Überlastbereich und/oder einem Unterlastbereich betrieben wird, in welchem die Strahlintensität (6) um eine Modulationsamplitude (11) von einer Normintensität des Wirklasers (2) abweicht.

7. Verfahren (M) nach Anspruch 6, wobei der Strahlintensität (6) mehrere Modulationspulse (9) aufgeprägt werden und wobei eine Modulationsamplitude (11) der Modulationspulse (9) adaptiv angepasst wird.

8. Verfahren (M) nach Anspruch 6 oder 7, wobei der Modulationspuls (9) durch Abgleich eines Signalverlaufs der Reflexionsintensität (8) der erfassten Reflexionslaserstrahlung (7) mit einem Signalverlauf der Strahlintensität (6) des Dauerstrich-Laserstrahls (5) nachgewiesen wird.

9. Verfahren (M) nach einem der Ansprüche 6 bis 8, wobei die Laufzeitmessung mittels einer Flankendetektion in den Signalverläufen der Intensitäten (6, 8) durchgeführt wird.

10. Verfahren (M) nach einem der Ansprüche 6 bis 9, wobei der Modulationspuls (9) eine charakteristische Amplitudenvariation in einer Modulationsamplitude (11) aufweist und wobei die Laufzeitmessung durch eine Korrelationsmessung in den Signalverläufen der Intensitäten (6, 8) durchgeführt wird.

## Claims

1. Laser weapon system (1), having:
an active laser (2), which is designed to irradiate a target (4) with a continuous-wave laser beam (5) at a predetermined beam intensity (6); and
a radiation detector (3), which is designed to detect reflected laser radiation (7) which is reflected by the target (4) with a reflection intensity (8);
wherein the active laser (2) is designed to impose a modulation pulse (9) on the beam intensity (6) of the continuous-wave laser beam (5) in continuous-wave operation, and
wherein the radiation detector (3) is designed to detect the modulation pulse (9) in the reflection intensity (8) of the detected reflected laser radiation (7) and to determine a distance of the target (4) from the laser weapon system (1) via a time-of-flight measurement of the modulation pulse (9);
wherein the active laser (2) is designed to produce the modulation pulse (6) by lowering and/or increasing the beam intensity (6) over a pulse duration (10) of less than 1 ms by operating the active laser (2) in an overload range and/or an underload range in which the beam intensity (6) deviates by a modulation amplitude (11) from a standard intensity of the active laser (2).

2. Laser weapon system (1) according to claim 1, wherein the active laser (2) is designed to impose a plurality of modulation pulses (9) on the beam intensity (6) and wherein the active laser (2) is designed to adaptively adjust a modulation amplitude (11) of the modulation pulses (9).

3. Laser weapon system (1) according to claim 1 or 2, wherein the radiation detector (3) is designed to detect the modulation pulse (9) by comparing a signal profile of the reflection intensity (8) of the detected reflected laser radiation (7) with a signal profile of the beam intensity (6) of the continuous-wave laser beam (5).

4. Laser weapon system (1) according to one of claims 1 to 3, wherein the radiation detector (3) is designed to perform the time-of-flight measurement by means of an edge detection in the signal profiles of the intensities (6, 8).

5. Laser weapon system (1) according to one of claims 1 to 4, wherein the modulation pulse (9) has a characteristic amplitude variation in a modulation amplitude (11) and wherein the radiation detector (3) is designed to perform the time-of-flight measurement by a correlation measurement in the signal profiles of the intensities (6, 8).

6. Method (M) for measuring a distance between a laser weapon system (1) and a target (4), including:
irradiating (M1) the target (4) with a continuous-wave laser beam (5) of an active laser (2) of the laser weapon system (1) at a predetermined beam intensity (6), wherein a modulation pulse (9) is imposed on the beam intensity (6) of the continuous-wave laser beam (5);
detecting (M2) reflected laser radiation (7) with a radiation detector (3) of the laser weapon system (1), which is reflected by the target (4) with a reflection intensity (8);
detecting (M3) the modulation pulse (9) in the reflection intensity (8) of the detected reflected laser radiation (7); and
determining (M4) the distance of the target (4) from the laser weapon system (1) via a time-of-flight measurement of the modulation pulse (9);
wherein the modulation pulse (9) is produced by lowering and/or increasing the beam intensity (6) over a pulse duration (10) of less than 1 ms by operating the active laser (2) in an overload range and/or an underload range in which the beam intensity (6) deviates by a modulation amplitude (11) from a standard intensity of the active laser (2).

7. Method (M) according to claim 6, wherein a plurality of modulation pulses (9) are imposed on the beam intensity (6) and wherein a modulation amplitude (11) of the modulation pulses (9) is adaptively adjusted.

8. Method (M) according to claim 6 or 7, wherein the modulation pulse (9) is detected by comparing a signal profile of the reflection intensity (8) of the detected reflected laser radiation (7) with a signal profile of the beam intensity (6) of the continuous-wave laser beam (5).

9. Method (M) according to one of claims 6 to 8, wherein the time-of-flight measurement is performed by means of an edge detection in the signal profiles of the intensities (6, 8).

10. Method (M) according to one of claims 6 to 9, wherein the modulation pulse (9) has a characteristic amplitude variation in a modulation amplitude (11) and wherein the time-of-flight measurement is performed by a correlation measurement in the signal profiles of the intensities (6, 8).

## Revendications

1. Système d'arme laser (1), comportant :
un laser actif (2), qui est conçu pour irradier une cible (4) avec un faisceau laser continu (5) avec une intensité de faisceau (6) prédéfinie ; et
un détecteur de rayonnement (3), qui est conçu pour détecter un rayonnement laser réfléchi (7) qui est réfléchi par la cible (4) avec une intensité de réflexion (8) ;
dans lequel le laser actif (2) est conçu pour appliquer une impulsion de modulation (9) à l'intensité de faisceau (6) du faisceau laser continu (5) en mode continu, et
dans lequel le détecteur de rayonnement (3) est conçu pour déceler l'impulsion de modulation (9) dans l'intensité de réflexion (8) du rayonnement laser réfléchi (7) détecté et pour déterminer, par le biais d'une mesure du temps de propagation de l'impulsion de modulation (9), une distance entre la cible (4) et le système d'arme laser (1) ;
dans lequel le laser actif (2) est conçu pour générer l'impulsion de modulation (6) par une baisse et/ou une hausse de l'intensité de faisceau (6) sur une durée d'impulsion (10) inférieure à 1 ms en faisant fonctionner le laser actif (2) dans une plage de surcharge et/ou une plage de sous-charge, dans laquelle l'intensité de faisceau (6) présente un écart égal à une amplitude de modulation (11) par rapport à une intensité standard du laser actif (2).

2. Système d'arme laser (1) selon la revendication 1, dans lequel le laser actif (2) est conçu pour appliquer plusieurs impulsions de modulation (9) à l'intensité de faisceau (6) et dans lequel le laser actif (2) est conçu pour ajuster de manière adaptative une amplitude de modulation (11) des impulsions de modulation (9).

3. Système d'arme laser (1) selon la revendication 1 ou 2, dans lequel le détecteur de rayonnement (3) est conçu pour déceler l'impulsion de modulation (9) par comparaison d'une courbe de signal de l'intensité de réflexion (8) du rayonnement laser réfléchi (7) détecté avec une courbe de signal de l'intensité de faisceau (6) du faisceau laser continu (5).

4. Système d'arme laser (1) selon l'une des revendications 1 à 3, dans lequel le détecteur de rayonnement (3) est conçu pour effectuer la mesure du temps de propagation au moyen d'une détection de flancs dans les courbes de signal des intensités (6, 8).

5. Système d'arme laser (1) selon l'une des revendications 1 à 4, dans lequel l'impulsion de modulation (9) présente une variation d'amplitude caractéristique dans une amplitude de modulation (11) et dans lequel le détecteur de rayonnement (3) est conçu pour effectuer la mesure du temps de propagation par une mesure de corrélation dans les courbes de signal des intensités (6, 8).

6. Procédé (M) de mesure de distance entre un système d'arme laser (1) et une cible (4), comportant :
l'irradiation (M1) de la cible (4) avec un faisceau laser continu (5) d'un laser actif (2) du système d'arme laser (1) avec une intensité de faisceau (6) prédéfinie, une impulsion de modulation (9) étant appliquée à l'intensité de faisceau (6) du faisceau laser continu (5) ;
la détection (M2), au moyen d'un détecteur de rayonnement (3) du système d'arme laser (1), d'un rayonnement laser réfléchi (7) qui est réfléchi par la cible (4) avec une intensité de réflexion (8) ;
le décèlement (M3) de l'impulsion de modulation (9) dans l'intensité de réflexion (8) du rayonnement laser réfléchi (7) détecté ; et
la détermination (M4) de la distance entre la cible (4) et le système d'arme laser (1) par le biais d'une mesure de la durée de propagation de l'impulsion de modulation (9) ;
dans lequel l'impulsion de modulation (9) est générée par une baisse et/ou une hausse de l'intensité de faisceau (6) sur une durée d'impulsion (10) inférieure à 1 ms en faisant fonctionner le laser actif (2) dans une plage de surcharge et/ou une plage de sous-charge, dans laquelle l'intensité de faisceau (6) présente un écart égal à une amplitude de modulation (11) par rapport à une intensité standard du laser actif (2).

7. Procédé (M) selon la revendication 6, dans lequel plusieurs impulsions de modulation (9) sont appliquées à l'intensité de faisceau (6) et dans lequel une amplitude de modulation (11) des impulsions de modulation (9) est ajustée de manière adaptative.

8. Procédé (M) selon la revendication 6 ou 7, dans lequel l'impulsion de modulation (9) est décelée par comparaison d'une courbe de signal de l'intensité de réflexion (8) du rayonnement laser réfléchi (7) détecté avec une courbe de signal de l'intensité de faisceau (6) du faisceau laser continu (5).

9. Procédé (M) selon l'une des revendications 6 à 8, dans lequel la mesure du temps de propagation est effectuée au moyen d'une détection de flancs dans les courbes de signal des intensités (6, 8).

10. Procédé (M) selon l'une des revendications 6 à 9, dans lequel l'impulsion de modulation (9) présente une variation d'amplitude caractéristique dans une amplitude de modulation (11) et dans lequel la mesure du temps de propagation est effectuée par une mesure de corrélation dans les courbes de signal des intensités (6, 8).
